# EUROPÄISCHE PATENTANMELDUNG

(11) **EP 2 333 745 A1**
(43) Veröffentlichungstag der Anmeldung: **15.06.2011**
(21) Anmeldenummer: 09450229.1
(22) Anmeldetag: 01.12.2009
(51) Int. Cl.: G09B 5/06, G09B 29/00

(54) **Informationssystem fur Reisende**

(71) Anmelder: Mag., Ekaterina Yarikova, 1030 Wien (AT)
(72) Erfinder: Mag., Ekaterina Yarikova, 1030 Wien (AT)
(74) Vertreter: Rippel, Andreas

(57) **Zusammenfassung**

Ein Informationssystem insbesondere für Reisende weist einen Plan, eine Beschreibung von Sehenswürdigkeiten und einen Datenträger, der abrufbare Informationen über Sehenswürdigkeiten gespeichert hat, auf.

Im Plan ist Anfang (1) und Ende (40) einer Besichtigungsroute eingetragen, Abschnitte dieser Besichtigungsroute sind in gesonderten Plänen eingetragen und in diesen gesonderten Plänen sind einzelne Besichtigungspunkte eingetragen, zu denen Abbildungen, insbesondere Fotos, beigegeben sind.

## Beschreibung

Die Erfindung bezieht sich auf ein Informationssystem insbesondere für Reisende, mit einem Plan, einer Beschreibung von Sehenswürdigkeiten und einem Datenträger, der abrufbare Informationen über Sehenswürdigkeiten gespeichert hat.

Bei bekannten Informationssystemen oder Reiseführern dieser Art sind die Sehenswürdigkeiten in Büchern der Reihe nach beschrieben, wobei ein Stadtplan die Orientierung erleichtert und eventuell über Ohrhörer in einem Datenträger gespeicherte Informationen wiedergegeben werden.

Die bekannten Reiseführer sind relativ umständlich zu handhaben und es ist daher das Ziel vorliegender Erfindung solche Informationssysteme oder Reiseführer so zu verbessern, dass deren Handhabung einfacher ist.

Erreicht wird dies bei einem Informationssystem der eingangs genannten Art dadurch, dass im Plan Anfang und Ende einer Besichtigungsroute eingetragen ist, dass Abschnitte dieser Besichtigungsroute in gesonderten Plänen eingetragen sind, und dass in diesen gesonderten Plänen einzelne Besichtigungspunkte eingetragen sind, zu denen Abbildungen, insbesondere Fotos, beigegeben sind.

Das erfindungsgemäße Informationssystem ermöglicht es dem Benützer auf einfache Weise einen Stadtrundgang oder Museumsrundgang durchzuführen: anhand des Stadtplanes oder Museumsplanes orientiert er sich vorerst grob über die zu gehende Route, anschließend hat er zu jedem Teilstück einen genauen Plan und je eine Beschreibung mit Fotos der einzelnen Besichtigungspunkte.

Ein Rundgang wird durch einen nur die Besichtigungsroute wiedergebenden Teil des Planes noch mehr erleichtert.

Die Orientierung wird bei einem Stadtrundgang erleichtert, wenn an dem Datenträger ein Navigationsgerät, insbesondere GPS-Gerät, angeschlossen ist. Damit kann sich der Benützer in bekannter Weise jederzeit informieren wo er sich tatsächlich befindet.

Nachstehend ist die Erfindung anhand der Zeichnungen, in denen ein Ausführungsbeispiel der Erfindung dargestellt ist, näher beschrieben, ohne auf dieses Ausführungsbeispiel beschränkt zu sein.

Dabei zeigen:
- Fig. 1: den Stadtplan eines erfindungsgemäßen Informationssystems mit eingetragenem Anfang und Ende einer Besichtigungsroute;
- Fig. 2: einen vergrößerten Ausschnitt aus dem Stadtplan mit der gesamten Besichtigungsroute;
- Fig. 3: einen Plan des ersten Abschnittes der vorgesehenen Besichtigungsroute mit einer fotografischen Darstellung des ersten Besichtigungspunktes der Route;
- Fig. 4: Fotos der in Fig. 3 angegebenen Besichtigungspunkte 2, 3 und 4.

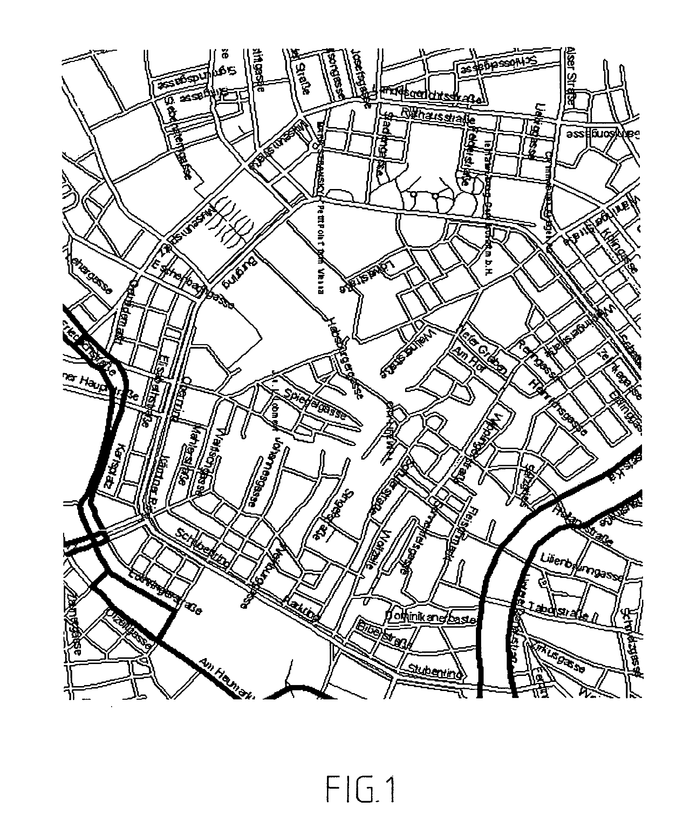

Die Fig. 1 zeigt den Stadtplan einer bekannten Stadt, wobei in diesem Stadtplan der Anfang 1 und das Ende 40 einer Besichtigungsroute eingetragen ist.

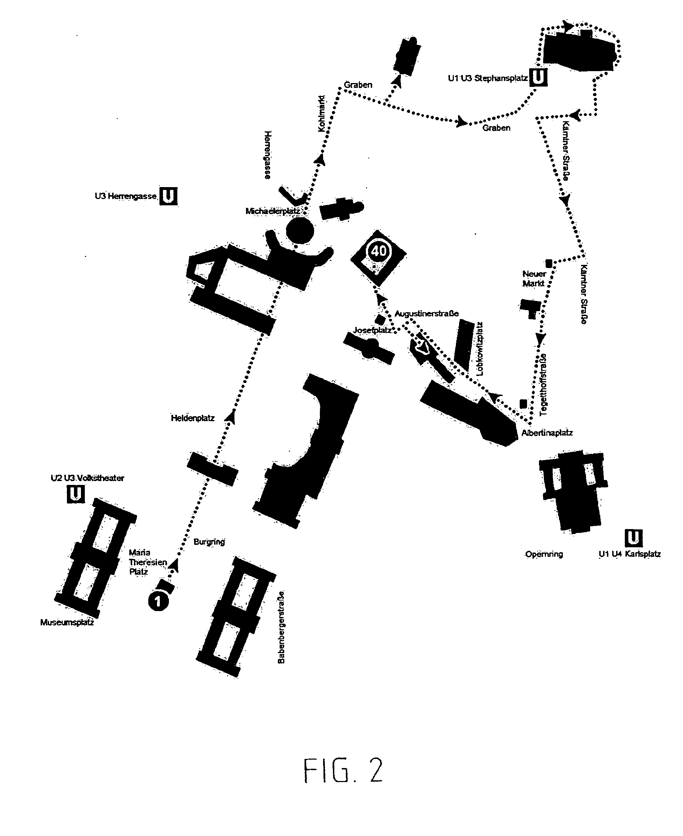

Die Fig. 2 zeigt in größerem Maßstab nur die im Stadtplan angegebene Besichtigungsroute von 1 bis 40. Die einzelnen Besichtigungspunkte sind, so wie im Stadtplan eingetragen, jedoch nicht bezeichnet.

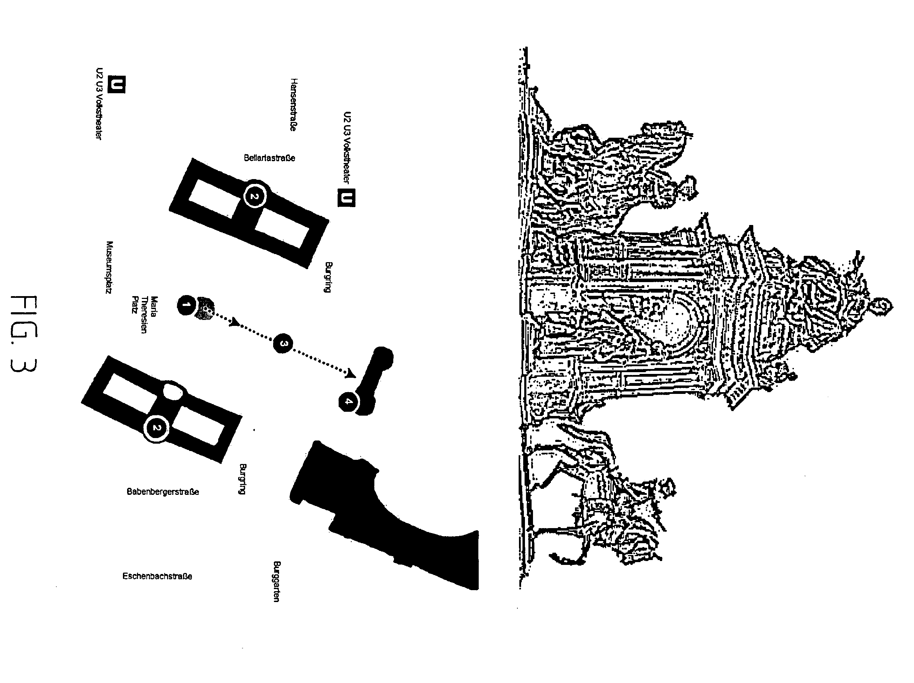

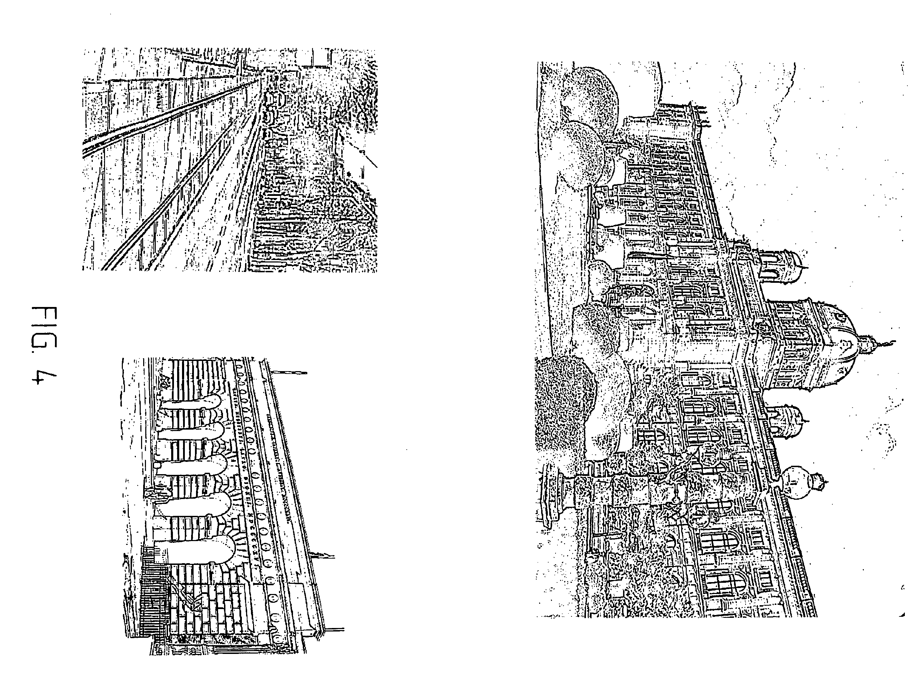

Schließlich gibt die Fig. 3 den ersten Teil 1 bis 4 der Besichtigungsroute wieder. Zu den einzelnen Besichtigungspunkten 1 bis 4 sind, siehe auch Fig. 4, bildliche Darstellungen enthalten, die dem Benutzer außer der akustischen Beschreibung vom Datenträger, ein Bild des jeweiligen Besichtigungspunktes geben.

Diese bildlichen Darstellungen werden im Normalfall Fotos sein, um den Zeichnungsvorschriften zu genügen, wurden sie jedoch als Strichzeichnungen wiedergegeben.

Die Erfindung ist nicht auf die Verwendung mit Stadtplänen beschränkt. Das erfindungsgemäße Informationssystem kann auch z.B. für Museen angewendet werden: Plan des Museums mit Anfang und Ende der Besichtigungstour, einzelne Abschnitte, z.B. Säle der Besichtigungstour, Beschreibung (auch akustisch) und Darstellung einzelner Besichtigungspunkte.

## Patentansprüche

1. Informationssystem insbesondere für Reisende, mit einem Plan, einer Beschreibung von Sehenswürdigkeiten und einem Datenträger, der abrufbare Informationen über Sehenswürdigkeiten gespeichert hat, **dadurch gekennzeichnet, dass** im Plan Anfang (1) und Ende (40) einer Besichtigungsroute eingetragen ist, dass Abschnitte dieser Besichtigungsroute in gesonderten Plänen eingetragen sind, und dass in diesen gesonderten Plänen einzelne Besichtigungspunkte eingetragen sind, zu denen Abbildungen, insbesondere Fotos, beigegeben sind.

2. Informationssystem nach Anspruch 1, **gekennzeichnet durch** einen nur die Besichtigungsroute wiedergebenden Teil des Planes.

3. Informationssystem nach Anspruch 1 oder 2, **dadurch gekennzeichnet, dass** an den Datenträger ein Navigationsgerät, insbesondere GPS-Gerät, angeschlossen ist.
